Europäisches Patentamt

European Patent Office

Office européen des brevets

(11) Publication number: **0 183 551**

**A1**

(12) # EUROPEAN PATENT APPLICATION

(21) Application number: 85308653.6

(22) Date of filing: 28.11.85

(51) Int. Cl.⁴: **A 01 D 43/00**
A 01 D 84/00, A 01 F 29/00

(30) Priority: 28.11.84 GB 8429983

(43) Date of publication of application:
04.06.86 Bulletin 86/23

(84) Designated Contracting States:
AT BE CH DE FR GB IT LI LU NL SE

(71) Applicant: T. & F. Equipment Limited
Spalding Road
Sutterton Boston Lincolnshire PE20 2ET(GB)

(72) Inventor: Thompson, Owen Culy
1 West Cobgate Moulton
Spalding Lincolnshire PE12 6QN(GB)

(72) Inventor: Giessler, Peter Martin
14 The Fen Quadring Fen
Spalding Lincolnshire(GB)

(72) Inventor: Fairbanks, Jack
West Parade
Spalding Lincolnshire(GB)

(72) Inventor: Culy, John Michael
East Cobgate Malton
Spalding Lincolnshire(GB)

(74) Representative: Goodman, Christopher et al,
Eric Potter & Clarkson 14 Oxford Street
Nottingham NG1 5BP(GB)

(54) Apparatus for chopping straw.

(57) Straw (or vegetable tops) are drawn into a turbine (18, 20, 22) by the force of air draught through the turbine, a turbulence being set up within the turbine by deflector plates (23, 21, 19) to throw the straw into the path of the turbine blades whereby it is chopped into very small pieces.

Fig. 1

Croydon Printing Company Ltd.

0183551

## APPARATUS FOR CHOPPING STRAW

The present invention relates to apparatus for chopping straw and more particularly to chopping apparatus for chopping straw or similar material into short lengths relative to the pre-chopped lengths.

Chopping apparatus for straw or similar material, for example potato tops, beet tops is used to reduce the size of the material to a size whereby it can either be easily consumed by animals or where it can quickly rot down especially if buried in soil. Such apparatus can either be stationary (particularly when used for animal feed purposes) or can be movable either being mounted on wheels or other means for example for attachment to a tractor or similar vehicle.

In the present invention the term "straw" will normally be used but it is to be understood this term is to include other similar materials as above.

Known straw chopping apparatus incorporates flails through which the straw is fed to be chopped into smaller sizes. This type of apparatus suffers from a number of disadvantages. Firstly the flailing action produces substantial wear on components and secondly the apparatus does not cope very well with wet straw. Also in use in the field a complex system is required for feeding the straw into the flails.

It is an object of the present invention to provide a chopping apparatus for straw which is relatively simple in construction, reliable and which can cope with wet straw.

According to the present invention there is provided an apparatus for chopping straw including turbine means through which the straw is drawn by the axial flow of air through the turbine and including means for creating turbulence within the turbine means to cause the straw to be thrown into the path of the turbine blades for cutting by the blades.

In a preferred embodiment the turbine includes a main shaft on which is mounted a plurality of blade assemblies at spaced intervals, each blade assembly comprising a centre hub and a plurality of turbine blades removably fixed thereto.

Preferably there are three turbine blade assemblies the leading assembly comprising a lesser number of blades than the middle and following assembly such that the cutting action is carried out more evenly over the whole turbine.

The turbulence within the turbine is preferably produced by one or more inwardly projecting flanges provided in front of one or more of the turbine blade assemblies.

Each turbine blade is preferably sharpened at the leading edge to assist in cutting the straw.

A roller assembly with a driven roller is preferably provided at the front end to assist in guiding the straw into the turbine assembly. This is particularly useful in the vehicle mounted version where the straw has to be drawn into the turbine from the ground and where the straw may be damp.

Preferably a space is left between the revolving roller and the turbine assembly, the space being wide enough for any stones or similar heavy objects picked up by the roller to drop through prior to entering the turbine assembly.

A flexible curtain is preferably provided at the front end of the turbine assembly to block the passage of air through the upper portion of the turbine. This feature assist in the passage of air through the bottom portion of the turbine close to the ground to assist in the picking up of the straw and its entry into the turbine.

The exit of the turbine may be provided with a shroud to direct the chopped straw in a desired direction or it may be left open for the broadcasting of the chopped straw.

Particularly in the vehicle mounted unit the unit may comprise two or more turbine assemblies mounted along-side each other to provide a wider swathe. Each turbine assembly is preferably driven by the vehicle auxiliary drive system, a single roller of a length to service all turbine assemblies being preferable and being also driven from the vehicle auxiliary drive system.

In a preferred embodiment the leading turbine blade assembly may be mounted in a forward position to enable it to cut off the tops of growing plants such as beet or potatoes, the turbine action pulling the tops through the apparatus for cutting into small sizes.

Embodiments of the present invention will now be described, by way of example with reference to the accompanying drawings, in which:-

Figure 1 shows diagrammatically a tractor with vehicle drawn apparatus for chopping straw according to the present invention;

Figure 2 shows in elevation a diagrammatic front view of the apparatus for chopping straw according to the present invention;

Figure 3 shows in elevation diagrammatically a rear view of the apparatus of Figure 2;

Figure 4 shows a more detailed longitudinal cross-section of a further embodiment of the apparatus for chopping straw according to the present invention;

Figure 5 shows the apparatus of Figure 4 in plan view illustrating the drive system;

Figure 6 shows the apparatus of Figure 4 in rear elevation to further illustrate the drive system; and

Figure 7 shows a turbine blade suitable for use in the apparatus for chopping straw according to the present invention.

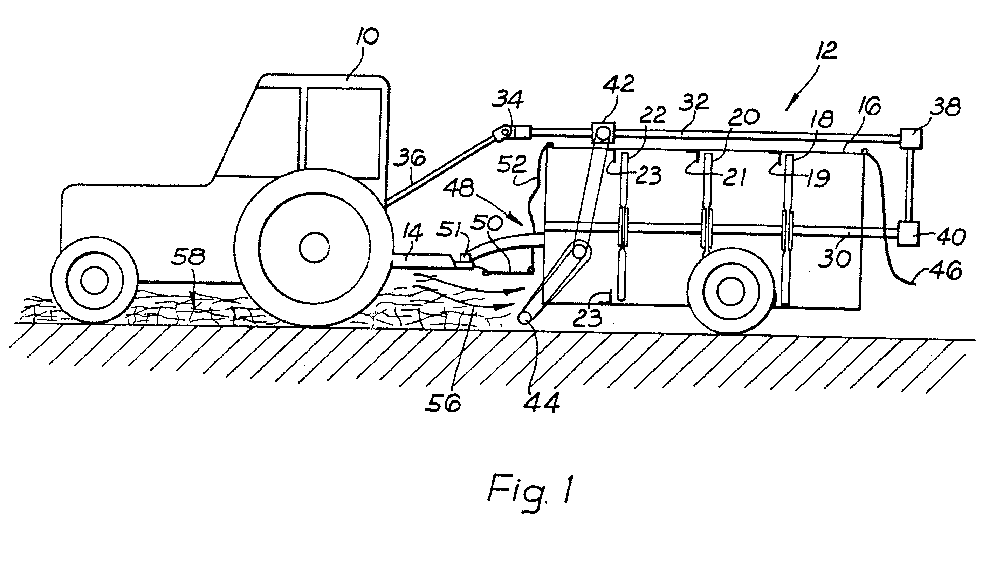

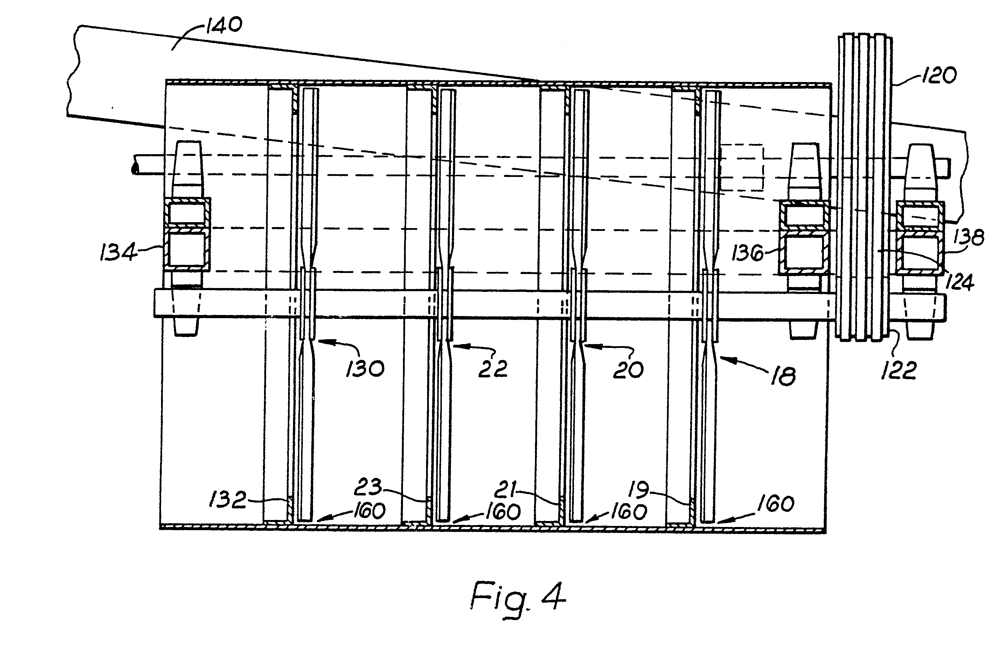

With reference now to Figure 1 a tractor 10 is attached to the apparatus for chopping straw 12 by a tow bar arrangement 14. The apparatus 12 includes a main body 16 housing turbine blade assemblies 18, 20, 22 mounted on flanges 24, 26, 28 preferably welded to a turbine shaft 30. Turbulence creating means 19, 21, 23 are provided in front of each turbine assembly. These may consist of an angle section protruding into the interior of the turbine preferably around the total periphnery (see Figure 4).

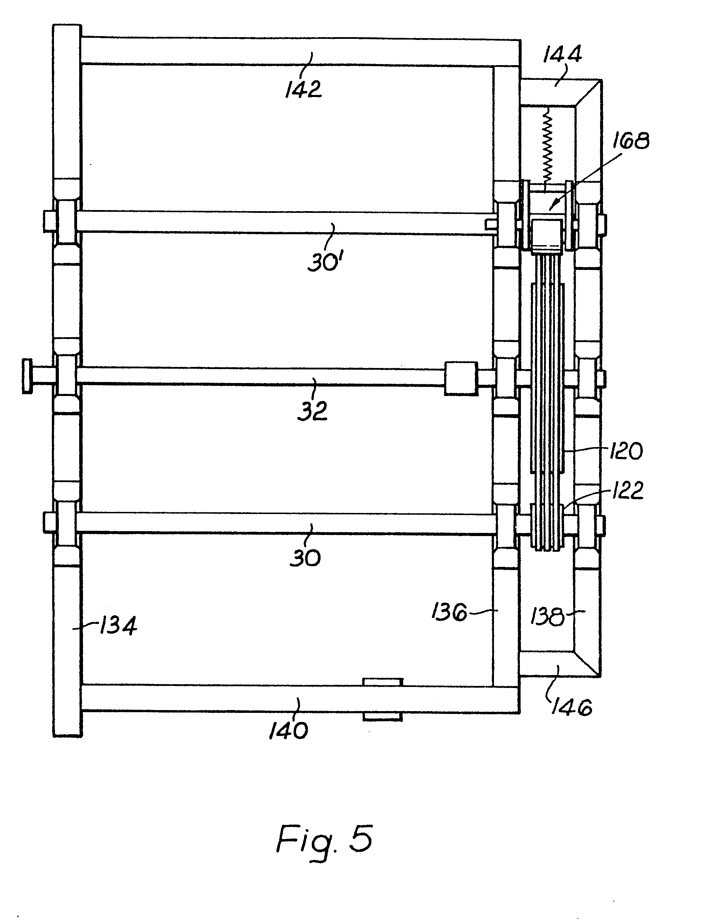

The turbine shaft 30 is rotated by a main drive shaft 32 which is driven by a coupling 34 which is capable of transmitting drive from an auxiliary drive shaft 36 of the tractor 10. In the embodiment shown in Figure 1 the drive is transmitted to the turbine shaft 30 via gearboxes 38, 40 mounted in the apparatus 12. Other suitable drive means may be used - e.g. pulley and belt as shown in Figures 4 and 5. Alternatively hydraulic drive could be used.

A further gearbox 42 is mounted at an intermediate point along main drive shaft 32 to allow power to be taken off for rotation of a roller 44 in the direction of the arrow. The drive for roller 44 is shown to be by means of a twin belt pulley arrangement however gearbox/shaft drive or hydraulic drive means could be used.

When the apparatus is used as shown being towed behind a tractor the gearbox or hydraulic drive is preferable because this is more environment (dust, dirt, rain) proof. However if the apparatus is used in a barn for chopping straw for cattle feed with for example a conveyor (not shown) feeding straw in place of the roller 44 then a belt drive suitably guarded is practical.

A shroud 46 may be provided at the exit end of the turbine to deflect the chopped straw downwards for example into a hopper (not shown) when used for chopping cattle feed. When used as shown in the field the shroud may be fitted or not. If fitted the chopped straw will be blown down onto the soil in a localised area. A spring tine and disc assembly may be drawn behind the apparatus 12 and the chopped straw will be buried to a depth of for example three to four inches. The chopped straw will rot down rapidly since the average length of material exiting from turbine apparatus 12 will be approximately 30 mm or less and any stalks will be broken by the chopping action. Thus the possibility of fungus growth within the tubes of unbroken stalks is considerably reduced or possibly entirely eliminated by this apparatus.

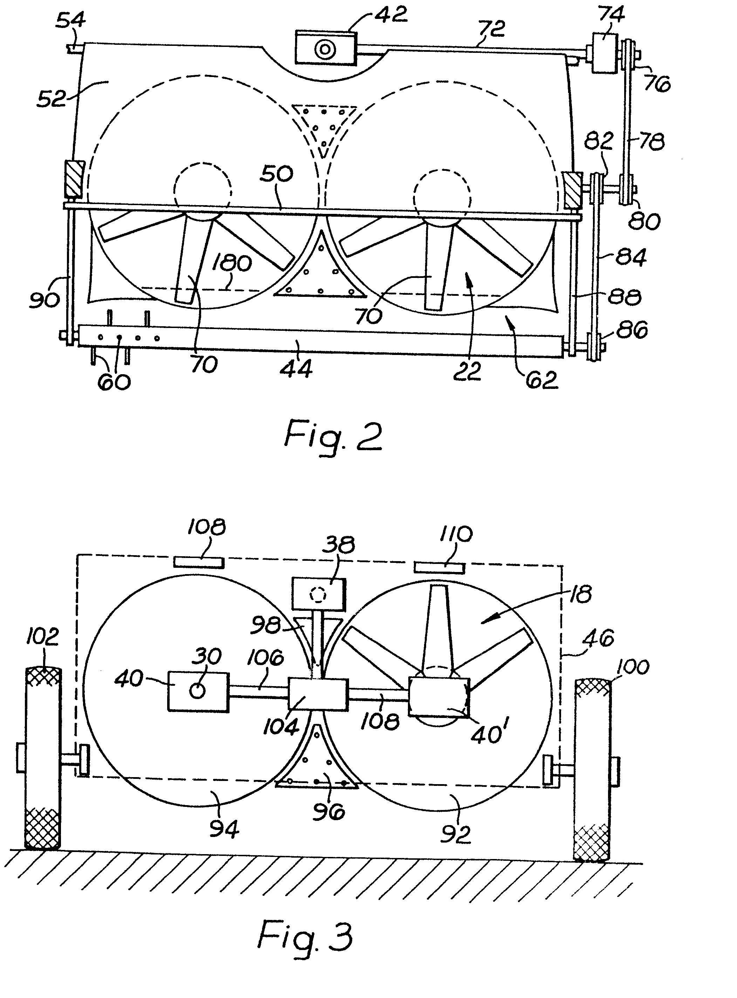

At the front of the turbine there is preferably fitted a curtain 48 comprising a steel plate 50 held up at its front end by a pivot arrangement 51 which allows the curtain to move upwardly. The curtain assembly is completed by a heavy canvas curtain 52 which blocks off the passage of air into the upper section of the turbine (see Figure 2). The canvas is fixed to the top of the apparatus for example by securing it to a rod 54 (Figure 2) and to the steel plate 50 thus allowing the steel plate to be lifted.

The curtain 48 deflects incoming air to the bottom portion of the turbine as shown by the arrows 56. The air is thus drawn in more closely to the ground and therefore picks up the straw 58 more efficiently.

In operation, the air drawn into the turbine creates an up-draft on the steel plate 50 to cause the steel plate 50 to effectively hover over the ground surface. Thus, the steel plate will accommodate to the height of the straw lying on the ground because it will hover at a height just above the straw level. Thus, the curtain 48 is self-regulating in operation and is able to cope with the various heights of the piles of straw left, for example, by a combine harvester.

The roller 44 is preferably two inches (50 mm) in diameter and may be equipped with spikes or spring tines 60 (Figure 2) for picking straw out of grass or weeds. This is useful if the straw has been allowed to lie in the field for a while after cutting and weeds have grown through or into it. The roller 44 rotates in a direction to feed the straw into the turbine but it is predominantly the air flow 56 which draws the straw into the turbine. The roller 44, because it rotates, does not become clogged with straw and therefore the apparatus operates more efficiently especially when the straw is wet.

The roller 44 is preferably mounted to have a ground clearance of four to six inches (100 to 150 mm) and also to be in front of the entance to the turbine leaving a gap 62 of four to six inches (100 to 150 mm) between the top of the roller and the bottom edge of the turbine. This gap need not be a vertical gap but can be at an angle. The gap allows any large stones which may be picked up by roller 44 to drop back to ground prior to entering the turbine thus preventing unnecessary damage to the turbine blades.

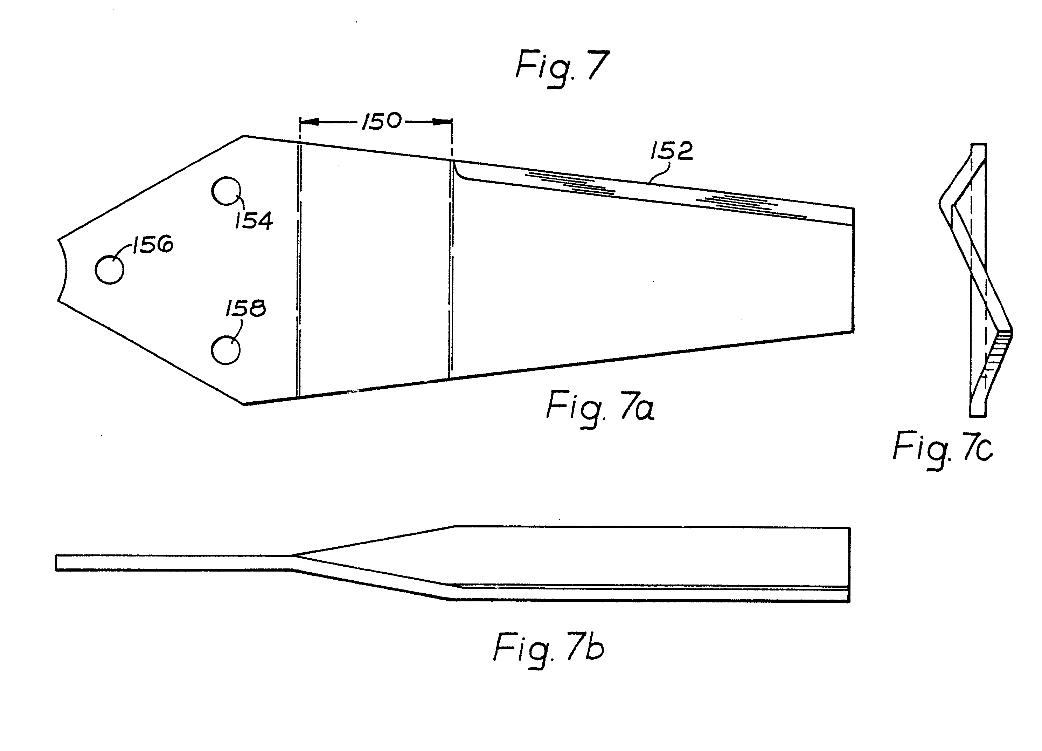

With reference now to Figure 2 the front of a twin turbine chopping apparatus is shown. The parts behind curtain 48 which is shown in its operative raised position are shown dotted. Only a portion of the front turbine blade assembly 22 is shown and this consists of a plurality of blades 70 shown in greater detail in Figure 7.

The front roller 44 is shown with a few spikes or spring tines 60 on the left hand end for illustration purposes. The roller will normally be spiked ot tined along its total length or be plain. The roller 44 is driven from gearbox 42 via shaft 72, gearbox 74 and double pulley and belt drive arrangement 76, 78, 80, 82, 84, 86. The roller is journalled in arms 88, 90 which extend downwardly from the main body of the apparatus. The double pully/belt arrangement may be replaced by a shaft drive with a gearbox in place of pulley 86. Any of the gearboxes may merely be for the extraction of power at selected take off points and will normally be fixed ratio boxes, the ratio being 1:1 in some cases. The shaft and gear box drive may be replaced by a chain drive which may be advantageous in certain circumstances.

With reference now to Figure 3, the rear end of the apparatus of Figure 2 is shown with the shroud 46 removed. The construction of the turbine apparatus is seen as comprising two tunnels 92, 94 fixed together by plates 96, 98. Wheels 100, 102 are mounted as shown to give the desired ground clearance. The rear turbine blade assembly 18 has more blades than the front turbine assembly 22. The central turbine assembly (not shown in detail) preferably has an intermediate number of blades. Gearbox 38 drives into gearboxes 40, 40' via an intermediate box 104 which has two output shafts 106, 108.

The shroud 46 (shown dotted) may be suspended on the machine from fixing points 108, 110.

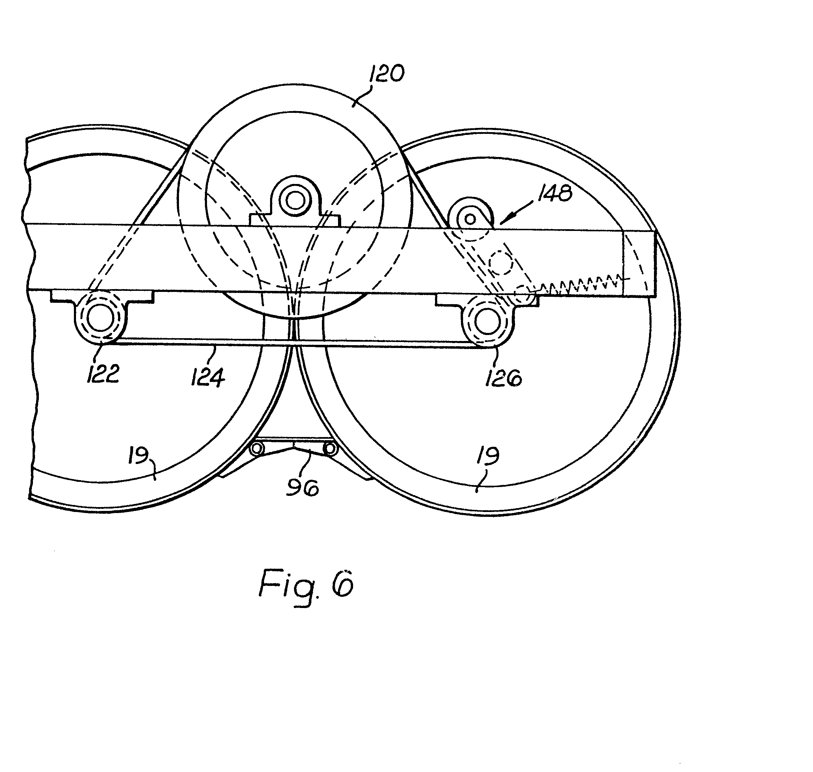

With reference now to Figure 4 the turbine assembly layout is shown in more practical detail. An alternative drive system is shown for shafts 30, 30' consisting of a multi-belt pulley drive system 120, 122, 124, 126 (see Figure 6). Four turbine blade assemblies 18, 20, 22, 130 are shown, the additional assembly 130 producing an initial course chop allowing finer chopping by assemblies 22, 20 and finally 18, An additional turbulence creator 132 is provided in front of blade assembly 130. The main frame members 134, 136, 138 are shown and a main chassis member 140 of a frame for supporting the apparatus is shown. This chassis 140 is a substitute for wheels 100, 102 and is used where the turbine is carried in a complex turbine, tine and disc assembly, the tines and discs also being carried on the same chassis.

The frame assembly can be seen more clearly in Figure 5 and comprises main frame members 134, 136, 138 which provide the journals for shafts 30, 30' and 32, these members being welded to members 140, 142, 144, 146 for rigidity. Box section steel is preferred.

With reference to Figure 6 a belt tensioner 148 is provided. Suspension means (not shown) may be provided to suspend the apparatus from the main frame 140 rather than have it rigidly mounted thereon.

With reference now to Figure 7, each turbine blade 70 preferably is made of 6 mm disc steel and is shaped as shown in Figures 7a, b and c in a twisted manner. This twist is all within area 150 and ensures that the blade both chops the straw by means of a sharpened leading edge 152 (sharpened preferably to 30°) and also produces the fan effect to pull the air through the turbine. Each blade preferably has three holes 154, 156, 158 for reception of fixing bolts to clamp the blade onto the hub assemblies. The blades are therefore easily replaced and being 6 mm steel are very strong and are not easily damaged by small stones etc.

The turbulence created by the "rings" of angle iron 19, 21, 23, 132 thus throw the straw into the path of the cutting edge of the blades where it is cut. The tubes of the straw stems are also smashed by the rotary forces and thus the finished material is chopped and broken for ease of rotting. The blades are mounted and dimensioned to have a clearance of about 15 mm (1/2 inch) as shown at 160 (Figure 4) between their tips and the edge of the turbine drum 16. This ensures that the machine will not easily jam. The turbulence creating parts 19, 21, 23, 132 may be positioned at any point between the blade assemblies.

In a practical apparatus each blade is of 1/4 inch (6mm) disc steel approximately one foot (300 mm) long and four inches (120 mm) wide at its widest part giving a turbine diameter of approximately two foot (600 mm). The speed of rotation is preferably 2500 r.p.m. The angle iron turbulence creator is preferably two inches (50 mm) section and is welded continuously to the interior of drum 16 to form a complete circular deflector.

In an alternative embodiment the front turbine blade 22 (Figure 1) or 130 (Figure 4) is mounted at the mouth of the main body 16. The roller assembly 44 is removed and a suitable cut out 180 (see Figure 2) shown in dotted lines is provided in the bottom part of the body 16.

When drawn forward over crops such as potatoes the machine will thus initially cut off the potato tops and the air flow through the apparatus will draw the cut tops into the apparatus. The tops will therefore be cut and chopped in one operation, the chopped tops being returned to the ground where they will quickly rot.

The front turbine blades 70 in the assemblies 22 or 130 may be of a different design to that shown in Figure 7 and may be provided with a further cutting edge for initial cutting of the tops.

CLAIMS

1. An apparatus for chopping straw characterised in that it includes turbine means (18, 20, 22, 30) through which the straw is drawn by the axial flow of air through the turbine and including means (19, 21, 23) for creating turbulence within the turbine means to cause the straw to be thrown into the path of the turbine blades (70) for cutting by the blades.

2. Apparatus as claimed in Claim 1 characterised in that the turbine (18, 20, 22, 30) includes a main shaft (30) on which is mounted a plurality of blade assemblies (18, 20, 22) at spaced intervals, each blade assembly comprising a centre hub (24, 26, 28) and a plurality of turbine blades (70) removably fixed thereto.

3. Apparatus as claimed in Claim 1 or Claim 2 characterised in that there are three turbine blade (18, 20, 22) assemblies the leading assembly (22) comprising a lesser number of blades than the middle (20) and following assembly (18) such that the cutting action is carried out more evenly over the whole turbine.

4. Apparatus as claimed in any one of Claims 1 to 3 characterised in that the turbulence within the turbine is produced by one or more inwardly projecting flanges (19, 21, 23) provided in front of one or more of the turbine blade assemblies and in that each turbine blade (70) is sharpened at the leading edge to assist in cutting the straw.

5. Apparatus as claimed in any one of Claims 1 to 4 characterised in that a roller assembly with a driven roller (44) is provided at the front end to assist in guiding the straw into the turbine assembly and in that a space (62) is left between the revolving roller (44) and the turbine assembly, the space being wide enough for any stones or similar heavy objects picked up by the roller to drop through prior to entering the turbine assembly.

6. Apparatus as claimed in any one of Claims 1 to 5 characterised in that a flexible curtain (50) is provided at the front end of the turbine assembly to block the passage of air through the upper portion of the turbine.

7. Apparatus as claimed in any one of Claims 1 to 6 characterised in that the exit of the turbine is provided with a shroud (46) to direct the chopped straw in a desired direction.

8. Apparatus as claimed in any one of Claims 1 to 7 characterised in that the apparatus comprises a vehicle mounted unit the unit comprising two or more turbine assemblies mounted along-side each other to provide a wider swathe, each turbine assembly being driven by the vehicle auxiliary drive system (34), a single roller (44) of a length to servuce all turbine assemblies being provided and being also driven (42) from the vehicle auxiliary drive system.

9. Apparatus as claimed in Claim 8 characterised in that the leading turbine blade assembly (22) may be mounted in a forward position to enable it to cut off the tops of growing plants such as beet or potatoes, the turbine action pulling the tops through the apparatus for cutting into small sizes.

Fig. 1

0183551

Fig. 2

Fig. 3

Fig. 4

0183551

Fig. 5

Fig. 6

# Fig. 7

Fig. 7a

Fig. 7b

Fig. 7c

150
152
154
156
158

6/6

0183551

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 661 584  (RONNING)  <br><br> * Column 4, line 10 - column 14, line 17; figures 1-12 * | 1,2,4, 7 | A 01 D  43/00 <br> A 01 D  84/00 <br> A 01 F  29/00 |
| A | FR-A-2 535 157  (BELTRAN)  <br><br> * Page  1, last paragraph; pages 2-4; figures 1,2 * | 1,4,5, 7 | |
| A | CH-A-  489 186  (TEXAS INDUSTRIES) <br> * Column 1, lines 35-39; columns 2-5; figures 1-7 * | 1,2,8 | |
| A | US-A-2 940 239  (LEWANDOWSKI) <br> * Column  2, lines 9-71; columns 3-5; figures 1-6 * | 1,7 | |

TECHNICAL FIELDS SEARCHED (Int. Cl.4)

A 01 D
A 01 F

The present search report has been drawn up for all claims

| Place of search | Date of completion of the search | Examiner |
|---|---|---|
| THE HAGUE | 03-03-1986 | VERMANDER R.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82